# EUROPÄISCHE PATENTSCHRIFT

(11) **EP 2 428 461 B1**
(45) Veröffentlichungstag und Bekanntmachung des Hinweises auf die Patenterteilung: **10.04.2013**
(21) Anmeldenummer: 11177546.6
(22) Anmeldetag: 15.08.2011
(51) Int. Cl.: B65D 50/04

(54) **Kindersicherer Verschluss für eine Austragsvorrichtung**
Child-proof cap for an applicator
Fermeture dotée d'une sécurité pour enfants pour un dispositif d'application de produit

(30) Priorität: 10.09.2010 EP 10176212
(43) Veröffentlichungstag der Anmeldung: 14.03.2012
(73) Patentinhaber: Sulzer Mixpac AG, 9469 Haag (CH)
(72) Erfinder: Habibi-Naini, Sasan, 8486 Rikon (CH)
(74) Vertreter: Sulzer Management AG

(56) Entgegenhaltungen:
- EP-A1- 0 730 913
- FR-A1- 2 916 741

## Beschreibung

Die Erfindung betrifft einen kindersicheren Verschluss für eine Austragsvorrichtung mit Bajonettbefestigungsmitteln im Sinne des Oberbegriffs von Anspruch 1.

Austragsvorrichtungen und insbesondere Mehrfachkartuschen zum Mischen und Ausbringen von Mehrkomponentenmassen sind beispielsweise aus der EP-A-0730913 bekannt. Dabei wird eine Verschlusskappe oder ein Mischerelement mittels eines Bajonettverschlusses an der Austragsvorrichtung befestigt.

In solchen Austragsvorrichtungen kommen vielfach Substanzen zur Anwendung, die chemisch mehr oder weniger aggressiv sind, und deren Einnahme oder Hautkontakt verhindert werden muss, da es ansonsten zu Vergiftungen oder Verätzungen von Personen oder Tieren kommen kann. Während Erwachsene im allgemeinen den korrekten Umgang mit derartigen Substanzen beherrschen, besteht insbesondere bei Kindern die Gefahr, dass sie den Inhalt der Austragsvorrichtung für etwas geniessbares halten und einnehmen.

Aufgabe vorliegender Erfindung ist es, einen kindersicheren Verschluss für eine Austragsvorrichtung mit Bajonettbefestigungsmitteln vorzuschlagen, welcher insbesondere Kinder vor einem unbefugten Zugriff zu derartigen, in der Austragsvorrichtung vorhandenen Substanzen schützt.

Diese Aufgabe wird durch eine Austragsvorrichtung mit den Merkmalen des Anspruchs 1 gelöst. Vorteilhafte Ausgestaltungen und zweckmässige Weiterbildungen der Erfindung sind in den Unteransprüchen angegeben.

Der erfindungsgemässe Verschluss verlangt zum Öffnen der Austragsvorrichtung die Koordination verschiedener Bewegungsabläufe mit zusätzlichem Kraftaufwand, was für Kinder, insbesondere Kleinkinder, nicht zu bewerkstelligen ist. Infolgedessen ist der vorgeschlagene Verschluss kindersicher.

Der kindersichere Verschluss eignet sich insbesondere für eine Mehrkomponentenkartusche enthaltend eine Mehrzahl von zylinderförmigen Behältern. Bevorzugt eignet sich der kindersichere Verschluss für eine Doppelkartusche zum Austragen zweier Komponenten. Die Behälter enthalten bevorzugt zylinderförmige Kammern. Die Kammern, d.h. der Innenraum der hohlzylinderförmigen Kartuschen-Behälter, können kreiszylinderförmig ausgebildet sein oder einen elliptischen oder polygonalen Querschnitt aufweisen. Zur Mehrkomponentenkartusche gehört auch ein Ausdrückstössel, welcher für jede Kammer einen formschlüssigen Kolben aufweist.

Die Mehrkomponentenkartuschen beinhalten neben den zylinderförmigen Kammern auch eine als Auslassteil dienende Anformung. Dabei betrifft der Auslassteil beispielsweise eine Gesamtheit von rohrförmigen Anformungen der einzelnen Kammern und/oder ein zylindrisches Anschlussteil. Das Auslassteil ist vom Verschluss übergreifbar und weist verschlussseitig für jede Komponente eine Ausgabeöffnung auf, d.h. die einzelnen Komponenten werden bis zum verschlussseitigen Ende des Auslassteils voneinander getrennt gehalten, so dass eine vorzeitige Vermischung der Komponenten verhindert wird.

Der Auslassteil der Mehrkomponentenkartusche enthält beispielsweise erste Bajonettbefestigungsmittel. Der Verschluss enthält damit korrespondierende, zweite Bajonettbefestigungsmittel. Eines der zwei Befestigungsmittel weist Bajonettlaschen auf, welche in entsprechende Sockelelemente des anderen Bajonettbefestigungsmittels einführbar sind. Zweckmässigerweise weisen beide Bajonettbefestigungsmittel auch Codierelemente für eine vorgegebene Ausrichtung des Verschlusses und der Austragvorrichtung oder Mehrkomponentenkartusche auf.

Der erfindungsgemässe, kindersichere Verschluss weist nun ein Verschlusselement mit ersten Eingriffselementen und eine das Verschlusselement wenigstens teilweise überdeckende Sicherungskappe mit zweiten Eingriffselementen auf. Zudem enthalten die Sicherungskappe und das Verschlusselement Formschlusselemente, welche das trennfeste Verbinden des Verschlusselements und der Sicherungskappe derart erlauben, dass das Verschlusselement und die Sicherungskappe gegeneinander frei drehbar gelagert bleiben, solange das Sicherungselement gegenüber dem Verschlusselement druckfrei bleibt, d.h. solange auf die Sicherungskappe kein mechanischer Druck von Aussen ausgeübt wird. Die Sicherungskappe ist zumindest teilweise derart elastisch verformbar ausgebildet, dass die ersten und zweiten Eingriffselemente durch Pressen der Sicherungskappe gegen das Verschlusselement miteinander in Eingriff bringbar sind.

Die Sicherungskappe stellt bevorzugt ein becher- oder kappenförmiges Element dar, welches dergestalt ausgebildet ist, dass es über das Verschlusselement stülpbar ist. Dabei sind das Verschlusselement und die Sicherungskappe bevorzugt hohlzylinderförmige Elemente mit einem Boden oder Deckel, wobei die Sicherungskappe einen grösseren Querschnitt aufweist als das Verschlusselement, so dass die Sicherungskappe mit ihrem hohlzylinderförmigen Teil über den hohlzylinderförmigen Teil des Verschlusselements stülpbar ist.

Das Verschlusselement ist bevorzugt ein becherförmiges Element mit einem hohlzylinderförmigen Teil und einem Boden, wobei das Verschlusselement an seiner Mantelfläche, d.h. an der Aussenseite des hohlzylinderförmigen Teils, oder an der Aussenseite des Bodens erste Eingriffselemente aufweist.

Die Sicherungskappe ist bevorzugt ein über das Verschlusselement stülpbares, ebenfalls becher- oder hutförmiges Element mit einem hohlzylinderförmigen Teil und einem Boden, wobei die Sicherungskappe bevorzugt auf seiner Innenseite, d.h. auf der Innenseite des hohlzylinderförmigen Teils oder auf der Boden-Innenseite, zweite Eingriffselemente aufweist.

Die Sicherungskappe ist dergestalt dimensioniert, dass die über das Verschlusselement gestülpte Sicherungskappe im mechanisch nicht beanspruchten Zustand gegenüber dem Verschlusselement frei drehbar ist, d.h. die ersten und zweiten Eingriffselemente nicht miteinander im Eingriff stehen. Hierbei bedeutet der Ausdruck "im mechanisch nicht beanspruchten Zustand", dass auf die über das Verschlusselement gestülpte Sicherungskappe keine äussere Kraft ausgeübt wird, wie dies beispielsweise durch Zusammendrücken der Kappe oder durch Aufdrücken oder Aufpressen der Sicherungskappe auf das Verschlusselement geschehen könnte.

Die Eingriffselemente am Verschlusselement wie auch an der Sicherungskappe bestehen bevorzugt aus einer Sägezahnstruktur, d.h. Rippen mit einer Sägezahnform. Demnach beschreiben die Eingriffselemente des Verschlusselements und der Sicherungskappe zusammen bevorzugt eine Sägezahnkupplung.

Die Sicherungskappe soll unverlierbar, jedoch im drucklosen Zustand frei drehbar an das Verschlusselement festlegbar sein. Dies geschieht bevorzugt durch Verwendung von Nut-Feder-Verbindungselementen. Dazu weist das Verschlusselement beispielsweise eine zu seiner konzentrischen Längsachse quer verlaufende, umlaufende oder sektorförmige Nut auf, und die Sicherungskappe weist beispielsweise ein elastisch in die Nut des Verschlusselements eingreifbares, an die Sicherungskappe angeformtes Federelement auf. Andererseits kann auch die Sicherungskappe eine zu seiner konzentrischen Längsachse quer verlaufende, umlaufende oder sektorförmige Nut aufweisen, wobei dann das Verschlusselement wenigstens ein elastisch in die Nut der Sicherungskappe eingreifbares, an das Verschlusselement angeformtes Federelement aufweist.

Die Sockelelemente der Austragsvorrichtung oder des Verschlusselementes stellen beispielsweise ring- oder sektorförmige Elemente mit gegebenenfalls einer Hinterschneidung dar. Die ring- oder sektorförmigen Elemente dienen so zur wenigstens teilweisen formschlüssigen Aufnahme der Bajonettlaschen.

Die Aussparungen an den Sockelelementen, d.h. der zwischen zwei segmentförmigen Sockelelementen befindliche freie Raum, sowie entsprechend gestaltete Bajonettlaschen unterschiedlicher Breite dienen zusammen bevorzugt als Codierelemente. Diese sind dann derart ausgebildet, dass die Bajonettlaschen des Verschlusselementes bzw. der Austragsvorrichtung bezüglich der Aussparungen der ring- oder sektorförmigen Sockelelemente in nur einer bestimmten Stellung einführbar sind.

Die Sockelelemente und die Austragsvorrichtung sind bevorzugt einstückig ausgebildet, zweckmässigerweise in Form eines gegossenen Formkörpers. Die Bajonettlaschen sind ebenfalls bevorzugt einstückig in der Gestalt eines gegossenen Formkörpers an das Verschlusselement angeformt. Alternativ können auch die Sockelelemente mit dem Verschlusselement einstückig in der Gestalt eines gegossenen Formkörpers ausgebildet sein, und die Bajonettlaschen einstückig als Gusskörperelement an die Austragsvorrichtung angeformt sein.

Ganz bevorzugt stellt das Verschlusselement ein zylinderförmiges Element dar, welches zumindest an einem Teil seiner Mantelfläche eine parallel zu seiner konzentrischen Längsachse verlaufende Sägezahnstruktur aufweist, wobei die Sicherungskappe als becherförmiges Element mit einem hohlzylinderförmigen Teil und einem Boden ausgebildet ist, und die Innenseite des becherförmigen Elements eine parallel zu seiner konzentrischen Längsachse verlaufende, in die Sägezahnstruktur des Verschlusselements eingreifbare Sägezahnstruktur aufweist. Dabei weist das Verschlusselement an dem gegen die Austragsvorrichtung gerichteten Rand seiner Mantelfläche quer zu seiner konzentrischen Längsachse, radial abstehende, segmentförmige Bajonettlaschen auf.

In einer weiteren bevorzugten Ausführungsform ist das Verschlusselement ein becherförmiges Element mit einem hohlzylinderförmigen Teil und einem Boden, welches zumindest an einem Teil seiner Boden-Aussenfläche eine radial nach aussen verlaufende Sägezahnstruktur aufweist, und die Sicherungskappe ebenfalls ein becherförmiges Element mit einem hohlzylinderförmigen Teil und einem Boden darstellt, wobei die Innenseite des Bodens der Sicherungskappe radial eine nach aussen verlaufende, in die Sägezahnstruktur des Verschlusselementes eingreifbare Sägezahnstruktur aufweist. Dabei weist das Verschlusselement an dem gegen die Austragsvorrichtung gerichteten Rand seiner Mantelfläche quer zu seiner konzentrischen Längsachse, wiederum radial abstehende, segmentförmige Bajonettlaschen auf.

Weiter bevorzugt sind an der Austragvorrichtung oder am Verschlusselement parallel zur Längsachse des Verschlusselements verlaufende, über den Bajonettlaschen angeordnete Anschlagflanken als Drehbegrenzung der beiden Bajonettbefestigungsmittel vorhanden.

Der erfindungsgemässe Verschluss kann eine Kappe zum Verschluss einer Austragsvorrichtung darstellen, kann aber auch ein Mischerelement, insbesondere ein statisches Mischerelement aufweisen, welches in fluide Verbindung mit dem Inhalt der Austragsvorrichtung bringbar ist, wobei das Mischerelement das Verschlusselement und die Sicherungskappe durchstösst, wobei weiter das Verschlusselement und die Sicherungskappe gegenüber dem Mischer frei drehbar, jedoch abdichtend ausgebildet sind.

Die Erfindung wird im Weiteren durch folgende Figuren beispielhaft weiter erläutert. Es zeigen
- Fig. 1: einen Längsschnitt einer Doppelkartusche;
- Fig. 2: Eine Draufsicht der Kartusche nach Fig. 1;
- Fig. 3: eine Draufsicht auf die zweiten Bajonettbefestigungsmittel des Verschlusselements;
- Fig. 4: eine perspektivische Ansicht einer ersten Ausführungsform eines auf eine Doppelkartusche mittels Bajonettverschluss befestigten Verschlusses;
- Fig. 5: eine perspektivische Ansicht des in Fig. 4 dargestellten Verschlusses in teilweise aufgeschnittener Darstellung;
- Fig. 6: eine perspektivische Darstellung des Verschlusselements und der dazu passenden Sicherungskappe des in Fig. 5 gezeigten Verschlusses;
- Fig. 7: eine perspektivische Ansicht einer zweiten Ausführungsform eines auf eine Doppelkartusche mittels Bajonettverschluss befestigten Verschlusses;
- Fig. 8: eine perspektivische Ansicht des in Fig. 7 dargestellten Verschlusses in teilweise aufgeschnittener Darstellung;
- Fig. 9: eine perspektivische Darstellung des Verschlusselements und der dazu passenden Sicherungskappe des in Fig. 8 gezeigten Verschlusses.

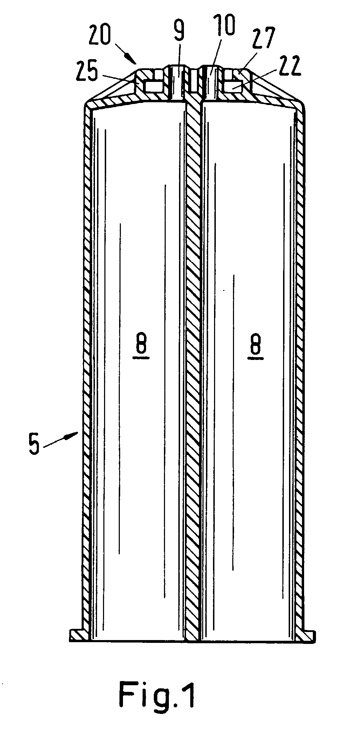

Fig. 1 zeigt einen Längsschnitt durch eine als Doppelkartusche ausgebildete Austragsvorrichtung 5, welche zwei zylindrische Behälter gleicher Querschnittsfläche für ein Dosierverhältnis 1 : 1 aufweist. Die Behälter 8 münden in zwei getrennte, zylindrische und voneinander beabstandete Auslässe 9 und 10. Falls ein statischer Zweikomponenten-Mischer an die Austragsvorrichtung angeschlossen wird, passen die Auslässe 9, 10 der Austragsvorrichtung derart in oder auf die Einlässe des Mischers, dass sich eine dichte Verbindung ergibt. Die Austragsvorrichtung 5 weist zudem erste Bajonettbefestigungsmittel 20 in Form von Sockelelementen 25, 27 auf. Die Sockelelemente beschreiben eine um die Auslässe 9, 10 verlaufende ring-oder segmentförmige Nut 22 zur Aufnahme zweiter Bajonettbefestigungsmittel.

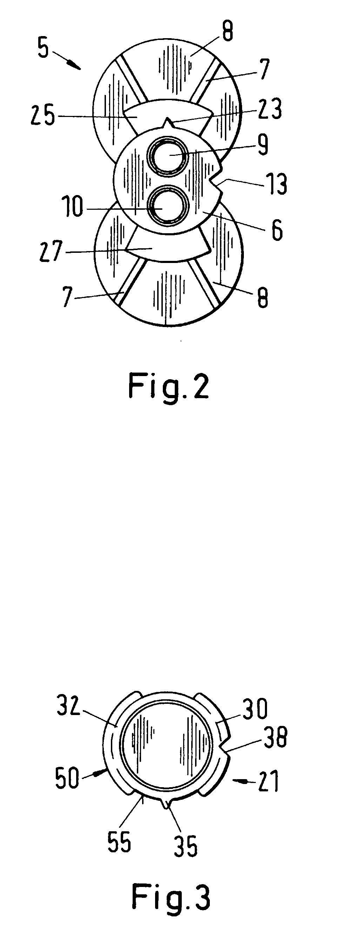

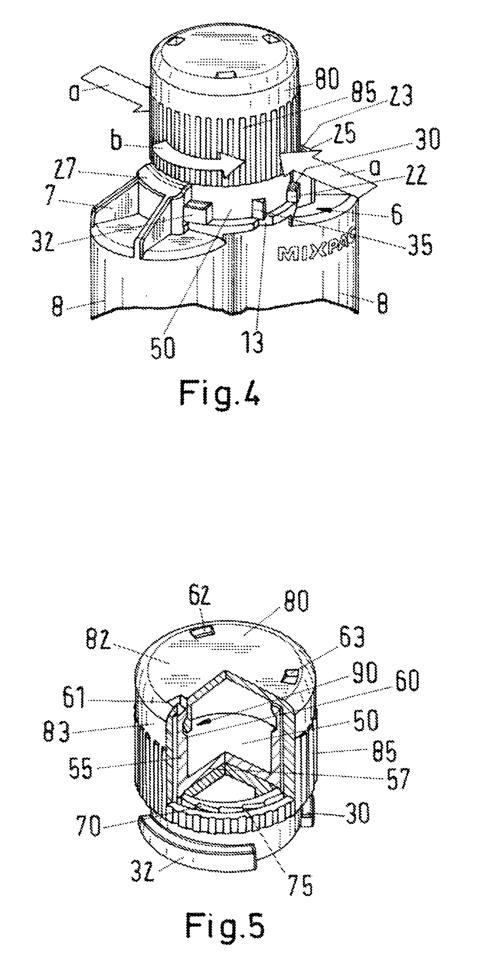

Fig. 2 zeigt eine Draufsicht auf die in Fig. 1 dargestellte Austragsvorrichtung 5 mit zwei zylindrischen Behältern 8 gleichen Querschnitts. Die Vorderseite 6 der Austragsvorrichtung 5 weist neben den Auslässen 9, 10 zwei einander gegenüberliegende, segmentförmige Sockelelemente 25 und 27 auf, wobei das Segment 25 etwas breiter ist als das Segment 27. Die segmentförmigen Sockelelemente 25, 27 weisen entsprechend segmentförmige Nuten 22 auf (siehe Fig. 1), welche der Aufnahme von Bajonettlaschen 30, 32 des Verschlusselementes 50 dienen (siehe Fig. 3 und Fig. 4). Die Sockelelemente 25, 27 sind durch Verstärkungsrippen 7 verstärkt. Die Vorderseite 6 der Austragsvorrichtung 5 weist zudem eine V-förmige Kerbe 13 als visuelles Codiermittel auf. Das segmentförmige Sockelelement 25 enthält eine radial nach innen geöffnete V-förmige Ausnehmung 23, welche mit einer an das Verschlusselement angeformten Codiernase 35 (siehe Fig. 3) kooperieren kann, so dass das Verschlusselement 50 nur in eine Richtung eingesetzt werden kann, was insbesondere bei einem Verschluss mit integriertem Mischer von Bedeutung ist. Die als Doppelkartusche ausgebildete Austragsvorrichtung 5 mit den zwei Behältern 8, den Auslässen 9 und 10, den segmentförmigen Sockelelementen 25 und 27 sowie den Verstärkungsrippen 7 bilden zusammen bevorzugt ein Kunststoff-Gussteil, insbesondere ein Spritzgussteil.

Fig. 3 zeigt eine Draufsicht auf die zweiten Bajonettbefestigungsmittel eines Verschlusselements 50 sowie auf den zylinderförmigen Teil 55 des Verschlusselements 50. Das Verschlusselement 50 weist zwei segmentförmige Bajonettlaschen 30 und 32 auf. Die Bajonettlasche 30 enthält zudem eine nach aussen geöffnete, V-förmige Kerbe 38 als Codiermittel, welche beispielsweise mit der Kerbe 13 der Austragsvorrichtung 5 korrespondiert, so dass bei einem in die Sockelelemente der Austragsvorrichtung 5 eingeschobenen, jedoch nicht eingerasteten Verschlusselement die Kerben 13 und 38 beispielsweise übereinanderliegen.

Das Verschlusselement 50 enthält an seinem zylinderförmigen Teil 55 eine angeformte Codiernase 35, welche zum Einführen des Verschlusses in den Bajonettsockel 25, 27 der Austragsvorrichtung 5 mit der V-förmigen Ausnehmung 23 des Sockelelements 25 korrespondiert. Weiter kann die Kerbe 13 der Austragsvorrichtung 5 bei einem in die Sockelelemente der Austragsvorrichtung 5 vollständig eingerasteten Verschlusselement 50 mit der Codiernase 35 korrespondieren, d.h. die Codiernase 35 und die Kerbe 13 liegen dann übereinander. Die Bajonettlaschen 30, 32 und die Codiernase 35 sind bevorzugt einstückig mit dem becherförmigen Verschlusselement 50 geformt, so dass das Verschlusselement inkl. Bajonettlaschen und Codiernase bevorzugt ein Gussteil, insbesondere ein Kunststoff-Spitzgussteil, darstellt.

Fig. 4 zeigt eine perspektivische Ansicht einer ersten Ausführungsform eines auf eine Doppelkartusche mittels Bajonettverschluss befestigten Verschlusses. Die Doppelkartusche enthält zwei Behälter 8 und auf der Vorderseite 6 der Kartusche sind segmentförmige Sockelelemente 25, 27 angeformt, welche durch Verstärkungsrippen in radialer Richtung stabilisiert werden. Das Verschlusselement 50 ist mittels in die segmentförmige Nut 22 der Sockelelemente 25, 27 eingeführte Bajonettlaschen 30, 32 befestigt. Die Bajonettlaschen 30, 32 sind einstückig an das Verschlusselement 50 angeformt. Das Verschlusselement 50 weist zudem eine Codiernase 35 auf, welche im dargestellten, geschlossenen Zustand, d.h. bei den vollständig in die Sockelelemente der Kartusche eingeschobenen Bajonettlaschen 30, 32 des Verschlusselements 50, mit der V-förmigen Kerbe 13 auf der Vorderseite 6 der Kartusche fluchtet. Das Verschlusselement wird grösstenteils durch eine Sicherungskappe 80 überdeckt, d.h. die Sicherungskappe reicht im geschlossenen Zustand bis an die Sockelelemente 25, 27, so dass nur ein unterer, gegen die Kartusche gerichteter Teil des Verschlusselements 50 enthaltend die Bajonettlaschen 30, 32 und die Codiernase 35 freiliegt und von aussen betrachtet sichtbar ist. Die Sicherungskappe 80 weist an ihrer Mantelfläche eine Riffelung 85 auf, welche zur einfacheren Handhabung der Sicherungskappe 80 dient. Die Riffelung 85 besteht aus einer Anzahl parallel zur Längsachse der Sicherungskappe 80 verlaufender Stege, wobei die Stege über den ganzen Umfang der Sicherungskappe umlaufend angeordnet sind. Die Länge der Stege ist jedoch kürzer als die zur Längsachse der Sicherungskappe gemessene Länge der Mantelfläche der Sicherungskappe, wobei die Riffelung bis an den unteren, gegen die Kartusche gerichteten Rand der Sicherungskappe 80 reicht.

Figur 5 zeigt eine perspektivische Ansicht des in Fig. 4 dargestellten Verschlusses in teilweise aufgeschnittener Darstellung. In Fig. 5 ist klar ersichtlich, dass das Verschlusselement 50 an der Innenseite des hohlzylinderförmigen Teils 55 im oberen Bereich, d.h. im den Bajonettflanschen abgekehrten Bereich, eine umlaufende Rastnut 60 aufweist, in welche Federelemente 90 der Sicherungskappe eingreifen. Die in Fig. 5 dargestellte Sicherungskappe 80 weist an ihrem Deckel drei Ausnehmungen 61, 62, 63 auf, an denen je ein Federelement 90 angeformt ist. Die Rastnut 60 und die Federelemente 90 bilden zusammen eine Nut-Feder Verrastung oder eine Schnappverbindung. Durch die Nut-Feder Verrastungselemente 60, 90 bilden das Verschlusselement 50 und die Sicherungskappe 80 eine Einheit, wobei die Sicherungskappe 80 im mechanisch nicht beanspruchten Zustand, d.h. im radial nicht druckbeanspruchten Zustand, gegenüber dem Verschlusselement 50 frei drehbar ist, die Sicherungskappe 80 jedoch unverlierbar mit dem Verschlusselement 50 verbunden ist, d.h. der Verschluss besteht aus einem Verschlusselement 50 und einer damit trennfest verrasteten, jedoch drehbar gelagerten Sicherungskappe 80.

Wie aus Fig. 5 hervorgeht, weist das Verschlusselement 50 an seiner Mantelfläche eine Sägezahnstruktur 70 auf, welche aus in Längsrichtung des Verschlusselements 50 verlaufende Rippen in Sägezahnform besteht. Die Sicherungskappe 80 weist eine dazu korrespondierende Sägezahnstruktur 75 auf. Solange die Sicherungskappe 80 radial nicht druckbeansprucht ist, greifen die Sägezahnstrukturen 70, 75 des Verschlusselements 50 und der Sicherungskappe 80 nicht ineinander, d.h. der Innendurchmesser der Sicherungskappe 80 inkl. Sägezahnstruktur ist grösser als der Aussendurchmesser des Verschlusselements inkl. Sägezahnstruktur. Die Sicherungskappe 80 ist aus elastischem Material gefertigt, so dass beim Ausüben eines radialen Druckes a auf die Sicherungskappe 80 die Sägezahnstrukturen 70, 75 des Verschlusselements 50 und der Sicherungskappe 80 ineinandergreifen und erst dadurch das Verschlusselement 50 in Richtung b gedreht werden kann. Demzufolge benötigt das Festlegen an wie auch das Wegnehmen des Verschlusses 50, 80 von der Kartusche 5 eine radiale Druckbewegung a wie auch eine entsprechende Drehbewegung b (siehe Fig. 4).

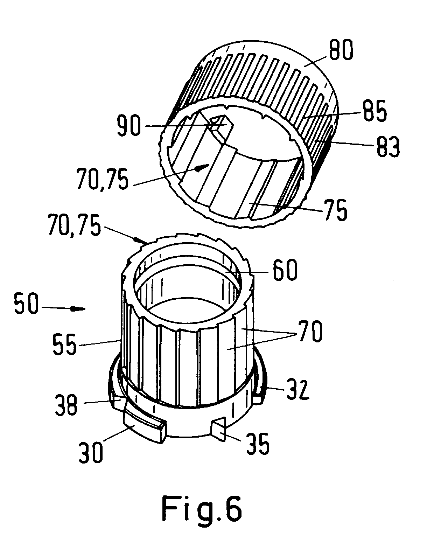

Figur 6 zeigt eine perspektivische Darstellung des Verschlusselements 50 und der dazu passenden Sicherungskappe 80 des in Fig. 5 gezeigten Verschlusses. Das in Fig. 6 gezeigte Verschlusselement 50 weist am unteren Ende seines zylinderförmigen Teils 55 die segmentförmigen Bajonettlaschen 30, 32, eine nach aussen geöffnete, V-förmige Kerbe 38 als Codiermittel sowie eine mit einer Ausnehmung 23 (siehe Fig. 2, Fig. 4, Fig. 7) des Sockelelements 25 der Doppelkartusche korrespondierende Codiernase 35 auf. Die Mantelfläche des zylindrischen Teils 55 des Verschlusselements 50 zeigt eine Sägezahnstruktur 70, wobei diese Struktur 70 aus in Längsrichtung des Verschlusselements 50 verlaufenden Rippen in Sägezahnform besteht. Im oberen Bereich an der Innenseite des hohlzylinderförmigen Teils 55 des Verschlusselements 50 befindet sich die umlaufende Rastnut 60.

Fig. 6 zeigt weiter eine zum Verschlusselement 50 passende Sicherungskappe 80 mit einem am Deckel der Sicherungskappe 80 angeformten Federelement 90. Die Innenwand des hohlzylinderförmigen Teils 83 der Sicherungskappe 80 weist eine zur Sägezahnstruktur 70 des Verschlusselements 50 korrespondierende Sägezahnstruktur 75 auf. Die Mantelfläche der Sicherungskappe 80 weist zudem eine Riffelung 85 zur besseren Handhabung auf.

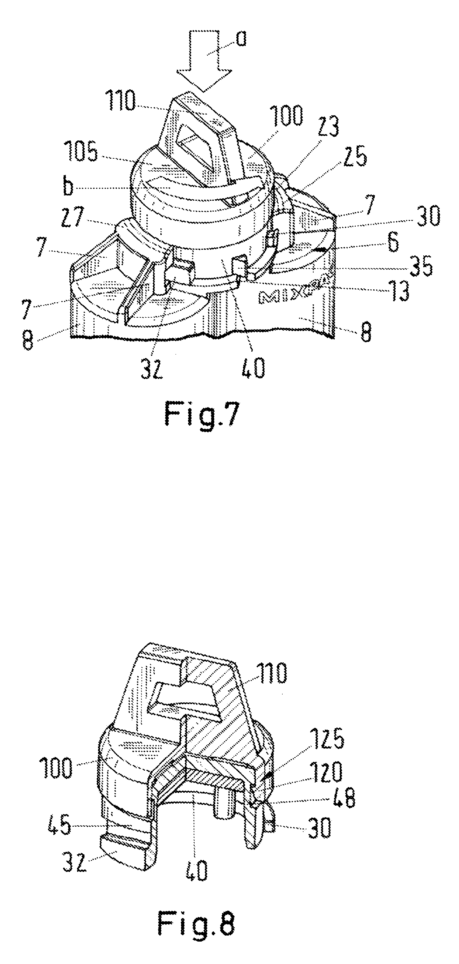

Figur 7 zeigt eine perspektivische Ansicht einer zweiten Ausführungsform eines auf eine Doppelkartusche mittels Bajonettverschluss befestigten Verschlusses. Die Doppelkartusche enthält zwei Behälter 8 zur Aufnahme je einer chemischen Komponente. Auf der Vorderseite 6 der Kartusche sind segmentförmige Sockelelemente 25, 27 angeformt, welche durch Verstärkungsrippen 7 in radialer Richtung stabilisiert sind. Das Verschlusselement 40 ist tassen- oder kappenförmig aufgebaut, wobei sein frei liegender Rand eine dem in Fig. 4 bis 6 gezeigten Verschlusselement 50 entsprechende Flanschstruktur aufweist, d.h. auch das Verschlusselement 40 weist segmentförmige Bajonettlaschen 30, 32 und eine Codiernase 35 auf, da auch das Verschlusselement 40 zweiter Art auf eine handelsübliche Doppelkartusche mit Bajonettbefestigungsmittel passen soll. Folglich ist das Verschlusselement 40 mittels in die segmentförmige Nut 22 der Sockelelemente 25, 27 der Austragsvorrichtung 5 eingeführte Bajonettlaschen 30, 32 befestigbar. Die Bajonettlaschen 30, 32 und die Codiernase 35 sind bevorzugt einstückig an das Verschlusselement 40 angeformt. Die Codiernase 35 fluchtet im dargestellten, geschlossenen Zustand, d.h. bei den vollständig in die Sockelelemente der Kartusche eingeschobenen Bajonettlaschen 30, 32, mit der V-förmigen Kerbe 13 auf der Vorderseite 6 der Kartusche. Das Verschlusselement 40 wird wiederum grösstenteils durch eine Sicherungskappe 100 überdeckt, d.h. die Sicherungskappe reicht im geschlossenen Zustand bis an die Sockelelemente 25, 27, so dass nur ein unterer, gegen die Kartusche gerichteter Teil des Verschlusselements 40 enthaltend die Bajonettlaschen 30, 32 und die Codiernase 35 freiliegt und von aussen sichtbar ist. Die Sicherungskappe 100 weist an ihrem Deckelelement 105 einen Drehbügel 110 auf, welcher zur einfacheren Handhabung der Sicherungskappe 100 dient.

Fig. 8 zeigt eine perspektivische Ansicht des in Fig. 7 dargestellten Verschlusses in teilweise aufgeschnittener Darstellung. In Fig. 8 ist am oberen Teil der Mantelfläche des zylindrischen Teils 45 des Verschlusselements 40, d.h. an der den Bajonettbefestigungsmittel abgekehrten Seite der Mantelfläche des Verschlusselements 40, eine umlaufende Nut sichtbar, welche als Rastnut 48 bezeichnet wird und zum Eingriff von Federelementen 120 der Sicherungskappe zweiter Art dient. Die in Fig. 8 gezeigte Sicherungskappe 100 weist einen frei liegenden, umlaufenden Rand auf, welcher entweder insgesamt als Federelement 120 ausgebildet ist, oder eine Anzahl, insbesondere drei getrennte Federelemente 120 aufweist. Die Federelemente 120 sind bevorzugt als hakenförmige Nasen derart ausgebildet, dass jede hakenförmige Nase in die gegebenenfalls leicht hinterschnittene Rastnut 48 eingreifen können. Da die Sicherungskappe und insbesondere ihr freiliegender Rand wenigstens teilweise elastisch ausgebildet ist, lässt sich die Sicherungskappe 100 mit den hakenförmigen Nasen über das Verschlusselement 40 stülpen, wobei in der Endstellung die hakenförmigen Nasen hinter die umlaufende Rastnut 48 greifen, so dass dadurch die Sicherungskappe 100 unverlierbar am Verschlusselement 40 befestigt ist. Die Rastnut 48 und die als hakenförmige Nasen ausgebildeten Federelemente 120 bilden zusammen eine Nut-Feder-Verrastung 125 oder eine Schnappverbindung. Durch die Nut-Feder-Verrastung 125 bilden das Verschlusselement 40 und die Sicherungskappe 100 eine Einheit, wobei die Sicherungskappe 100 im mechanisch nicht beanspruchten Zustand, d.h. in einem axial in Richtung der Längsachse des Verschlusselements 40 und der Sicherungskappe 100 nicht druckbeanspruchten Zustand, gegenüber dem Verschlusselement 40 frei drehbar ist, die Sicherungskappe 100 jedoch unverlierbar mit dem Verschlusselement 40 verbunden ist, d.h. der Verschluss besteht aus einem Verschlusselement 40 und einer damit trennfest verrasteten, jedoch durch die Nut-Feder-Verrastung 125 drehbar gelagerten Sicherungskappe 100.

Aus Fig. 8 ist auch klar ersichtlich, dass der Drehbügel 110 der Sicherungskappe 100 wie auch die an die Sicherungskappe 100 angeformten Federelemente 120 mit der Sicherungskappe eine Einheit bilden, d.h. ein Gussstück bilden, welches bevorzugt ein Kunststoff-Gusselement darstellt.

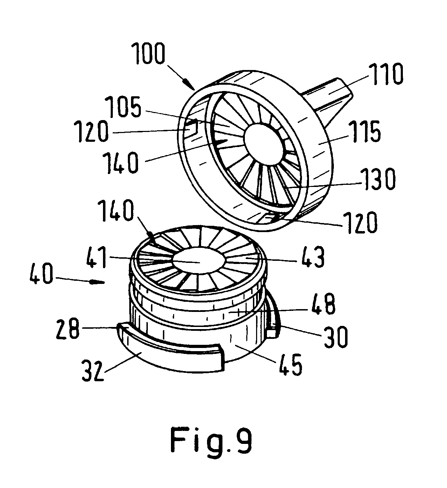

Figur 9 zeigt eine perspektivische Darstellung des Verschlusselements 40 und der dazu passenden Sicherungskappe 100 des in Fig. 8 gezeigten Verschlusses.

Das in Fig. 9 gezeigte Verschlusselement 40 weist am unteren Ende seines zylinderförmigen Teils 45 die segmentförmigen Bajonettlaschen 30 und 32 auf. Die obere Fläche der Bajonettlaschen kann dabei eine Anschrägung 28 aufweisen, damit das anfängliche Einführen der Bajonettlaschen 30, 32 in die Sockelelemente 25 und 27 der Austragsvorrichtung erleichtert wird.

Die Mantelfläche des zylindrischen Teils 45 des Verschlusselements 40 weist einerseits die umlaufende Rastnut 48 und der Deckelbereich eine radial verlaufende Sägezahnstruktur 43 auf. Die Sägezahnstruktur 43 an der Deckelaussenseite des Verschlusselementes 40 wird durch radial verlaufende Rippen in Sägezahnform gebildet, wobei die Länge der Rippen nicht den ganzen Radius des Deckelbereichs umfassen, sondern nur etwa 1/2 bis 2/3 des Deckel-Aussenbereichs (siehe Fig. 9).

Fig. 9 zeigt weiter eine zum Verschlusselement 40 passende Sicherungskappe 100 mit an der Innenfläche des zylindrischen Teils 115 des Verschlusselementes 40, im Bereich des umlaufenden, freien Endes angeformten Federelementen 120. Die Innenseite des Deckelteils 105 der Sicherungskappe 100 weist eine zur Sägezahnstruktur 43 des Verschlusselements korrespondierende Sägezahnstruktur 130 bestehend aus radial verlaufenden Rippen in Sägezahnform auf. Weiter zeigt die Sicherungskappe 100 einen Drehbügel 110, welcher der einfacheren Handhabung des Verschlusses dient.

Das Verschlusselement 40 und die Sicherungskappe 100 sind derart ausgebildet, dass in ihrem gegenseitig verrasteten Zustand bei nicht druckbeanspruchter Sicherungskappe das Verschlusselement 40 und die Sicherungskappe 100 frei drehbar sind, d.h. die Sägezahnstrukturen 43 und 130 greifen nicht ineinander, d.h. die Federelemente 120 weisen in der Rastnut 48 ein gewisses Spiel auf. Beim Ausüben eines axialen Druckes a, d.h. Druck in Richtung der Austragsvorrichtung der Doppelkartusche, auf die Sicherungskappe 100 greifen die beiden Sägezahnstrukturen 43 und 130 ineinander und bilden somit eine Sägezahnkupplung 140. Im verzahnten Zustand lässt sich durch Drehen der Sicherungskappe 100 in Richtung b auch das Verschlusselement 40 mitdrehen, so dass der aus Verschlusselement 40 und Sicherungskappe 100 bestehende Verschluss aus den Sockelelementen 30, 32 der Austragsvorrichtung 5 heraus oder hereindrehen lässt. Demzufolge benötigt das Festlegen an wie auch das Wegnehmen des Verschlusses von der Doppelkartusche 5 eine axiale Druckbewegung a wie auch eine entsprechende Drehbewegung b.

## Patentansprüche

1. Kindersicherer Verschluss für eine Austragvorrichtung (5) mit ersten Bajonettbefestigungsmitteln (20), wobei der Verschluss (40, 50, 80, 100) zweite Bajonettbefestigungsmittel (21) aufweist, und eines der zwei Bajonettbefestigungsmittel (20, 21) Bajonettlaschen (30, 32) aufweist, welche in entsprechende Sockelelemente (25, 27) des anderen Bajonettbefestigungsmittels (20, 21) einführbar sind, und beide Bajonettbefestigungsmittel (20, 21) Codierelemente (13, 23, 35, 38) für eine vorgegebene Ausrichtung des Verschlusses (40, 50, 80, 100) und der Austragvorrichtung (5) aufweisen,
**dadurch gekennzeichnet, dass**
der Verschluss (40, 50, 80, 100) ein Verschlusselement (40, 50) mit ersten Eingriffselementen (43, 70) und eine das Verschlusselement (40, 50) wenigstens teilweise überdeckende Sicherungskappe (80, 100) mit zweiten Eingriffselementen (75, 130) aufweist, die Sicherungskappe (80, 100) und das Verschlusselement (40, 50) mittels Formschlusselementen (58, 60, 90, 120) trennfest, jedoch gegeneinander drehbar verbunden sind, und die Sicherungskappe (80, 100) zumindest teilweise derart elastisch verformbar ausgebildet ist, dass die ersten und zweiten Eingriffselemente (43, 70, 75, 130) durch Pressen der Sicherungskappe (80, 100) gegen das Verschlusselement (40, 50) miteinander in Eingriff bringbar sind, wobei die Formschlusselemente (48, 60, 90, 100) des Verschlusselementes (40, 50) und der Sicherungskappe (80, 100) Nut-Feder-Verbindungselemente sind.

2. Kindersicherer Verschluss nach Anspruch 1, **dadurch gekennzeichnet, dass** die Sicherungskappe (80, 100) ein becherförmiges Element darstellt, welches dergestalt ausgebildet ist, dass es über das Verschlusselement (40, 50) stülpbar ist.

3. Kindersicherer Verschluss nach Anspruch 1 oder 2, **dadurch gekennzeichnet, dass** das Verschlusselement (40, 50) ein becherförmiges Element mit einem hohlzylinderförmigen Teil (45, 55) und einem Boden (41, 57) ist, wobei das Verschlusselement (40, 50) an seiner Mantelfläche (55) oder an der Aussenseite des Bodens (41) erste Eingriffselemente (43, 70) aufweist.

4. Kindersicherer Verschluss nach einem der Ansprüche 1 bis 3, **dadurch gekennzeichnet, dass** die Sicherungskappe (80, 100) ein über das Verschlusselement (40, 50) stülpbares, becherförmiges Element mit einem hohlzylinderförmigen Teil und einem Boden ist, wobei die Sicherungskappe (80, 100) auf seiner Innenseite zweite Eingriffselemente (75, 130) aufweist.

5. Kindersicherer Verschluss nach einem der Ansprüche 1 bis 4, **dadurch gekennzeichnet, dass** die Sicherungskappe (80, 100) dergestalt dimensioniert ist, dass die über das Verschlusselement (40, 50) gestülpte Sicherungskappe (80, 100) im mechanisch nicht beanspruchten Zustand gegenüber dem Verschlusselement (40, 50) frei drehbar ist.

6. Kindersicherer Verschluss nach einem der Ansprüche 1 bis 5, **dadurch gekennzeichnet, dass** die Eingriffselemente (43, 70, 75, 130) eine Sägezahnstruktur aufweisen.

7. Kindersicherer Verschluss nach Anspruch 1, **dadurch gekennzeichnet, dass** das Verschlusselement (40, 50) eine zu seiner konzentrischen Längsachse quer verlaufende, umlaufende oder sektorförmige Rastnut (48, 60) aufweist, und die Sicherungskappe (80, 100) wenigstens ein elastisch in die Rastnut (48, 60) des Verschlusselementes (40, 50) eingreifbares, an die Sicherungskappe (80, 100) angeformtes Federelement (90, 120) aufweist.

8. Kindersicherer Verschluss nach Anspruch 1, **dadurch gekennzeichnet, dass** die Sicherungskappe (80, 100) eine zu seiner konzentrischen Längsachse quer verlaufende, umlaufende oder sektorförmige Nut aufweist, und das Verschlusselement (40, 50) wenigstens ein elastisch in die Nut der Sicherungskappe eingreifbares, an das Verschlusselement (40, 50) angeformtes Federelement aufweist.

9. Kindersicherer Verschluss nach einem der Ansprüche 1 bis 8, **dadurch gekennzeichnet, dass** die Austragvorrichtung (5) eine Mehrkomponentenkartusche ist, insbesondere eine Zweikomponentenkartusche.

10. Kindersicherer Verschluss nach einem der Ansprüche 1 bis 9, **dadurch gekennzeichnet, dass** die Sockelelemente (25, 27) ring- oder sektorförmige Elemente mit einer Hinterschneidung zur wenigstens teilweisen formschlüssigen Aufnahme der Bajonettlaschen (30, 32) darstellen.

11. Kindersicherer Verschluss nach Anspruch 10, **dadurch gekennzeichnet, dass** die Codierelemente durch Aussparungen an den Sockelelementen (25, 27) und Bajonettlaschen 30, 32 unterschiedlicher Breite derart gebildet sind, dass die Bajonettlaschen (30, 32) des Verschlusselementes (40, 50) bzw. der Austragsvorrichtung (5) bezüglich der Aussparungen der ring- oder sektorförmigen Sockelelemente (25, 27) in nur einer bestimmten Stellung einführbar sind.

12. Kindersicherer Verschluss nach einem der Ansprüche 1 bis 11, **dadurch gekennzeichnet, dass** die Sockelelemente (25, 27) und die Austragsvorrichtung (5) einstückig in der Gestalt eines gegossenen Formkörpers ausgebildet sind, und die Bajonettlaschen (30, 32) einstückig in der Gestalt eines gegossenen Formkörpers an das Verschlusselement (40, 50) angeformt sind.

13. Kindersicherer Verschluss nach einem der Ansprüche 1 bis 11, **dadurch gekennzeichnet, dass** die Sockelelemente und das Verschlusselement (40, 50) einstückig in der Gestalt eines gegossenen Formkörpers ausgebildet sind, und die Bajonettlaschen einstückig in der Gestalt eines gegossenen Formkörpers an die Austragsvorrichtung (5) angeformt sind.

14. Kindersicherer Verschluss nach einem der Ansprüche 1 bis 13, **dadurch gekennzeichnet, dass** das Verschlusselement (50) ein zylinderförmiges Element ist und zumindest an einem Teil seiner Mantelfläche (55) eine parallel zu seiner konzentrischen Längsachse verlaufende Sägezahnstruktur (70) aufweist, die Sicherungskappe (80) ein becherförmiges Element mit einem hohlzylinderförmigen Teil (83) und einem Boden (82) ist, wobei die Innenseite des hohlzylinderförmigen Teils der Sicherungskappe (80) eine parallel zu seiner konzentrischen Längsachse verlaufende, in die Sägezahnstruktur (70) des Verschlusselementes (50) eingreifbare Sägezahnstruktur (75) aufweist, und das Verschlusselement (50) an dem gegen die Austragsvorrichtung gerichteten Rand seiner Mantelfläche quer zu seiner konzentrischen Längsachse, radial abstehende, segmentförmige Bajonettlaschen 30, 32 aufweist.

15. Kindersicherer Verschluss nach einem der Ansprüche 1 bis 13, **dadurch gekennzeichnet, dass** das Verschlusselement (40) ein becherförmiges Element mit einem hohlzylinderförmigen Teil (45) und einem Boden (41) ist und zumindest an einem Teil seiner Boden-Aussenfläche eine radial nach aussen verlaufende Sägezahnstruktur (43) aufweist, die Sicherungskappe (100) ein becherförmiges Element mit einem hohlzylinderförmigen Teil (115) und einem Boden (105) ist, wobei die Innenseite des Bodens (105) der Sicherungskappe (100) eine radial nach aussen verlaufende, in die Sägezahnstruktur (43) des Verschlusselementes (40) eingreifbare Sägezahnstruktur (130) aufweist, und das Verschlusselement (40) an dem gegen die Austragsvorrichtung gerichteten Rand seiner Mantelfläche quer zu seiner konzentrischen Längsachse, radial abstehende, segmentförmige Bajonettlaschen (30, 32) aufweist.

16. Kindersicherer Verschluss nach einem der Ansprüche 1 bis 15, **dadurch gekennzeichnet, dass** an der Austragvorrichtung (5) oder am Verschlusselement (40, 50) parallel zur Längsachse des Verschlusselements (40, 50) verlaufende, über den Bajonettlaschen (30, 32) angeordnete Anschlagflanken als Drehbegrenzung der beiden Bajonettbefestigungsmittel (20, 21) vorhanden sind.

17. Kindersicherer Verschluss nach einem der Ansprüche 1 bis 16, **dadurch gekennzeichnet, dass** der Verschluss einen Mischer, insbesondere ein statisches Mischerelement, enthält, wobei der Mischer in fluide Verbindung mit dem Inhalt der Austragsvorrichtung (5) bringbar ist und das Verschlusselement (40, 50) und die Sicherungskappe (80, 100) etwa mittig durchstösst, wobei das Verschlusselement (40, 50) und die Sicherungskappe (80, 100) gegenüber dem Mischer frei drehbar, jedoch abdichtend ausgebildet sind.

## Claims

1. A childproof closure for a dispensing apparatus (5) having first bayonet fastening means (20), wherein the closure (40, 50, 80, 100) has second bayonet fastening means (2 1) and one of the two bayonet fastening means (20, 21) has bayonet lugs (30, 32) which can be introduced into corresponding socket elements (25, 27) of the other bayonet fastening means (20, 21), and both bayonet fastening means (20, 21) have coding elements (13, 23, 35, 38) for a preset alignment of the closure (40, 50, 80, 100) and of the dispensing apparatus (5),
**characterized in that**
the closure (40, 50, 80, 100) has a closure element (40, 50) having first engagement elements (43, 70) and has a securing cap (80, 100) at least partly covering the closure element (40, 50) and having engagement elements (75, 130); the securing cap (80, 100) and the closure element (40, 50) are connected cohesively strongly, but rotatably with respect to one another by means of shape-matched elements (58, 60, 90, 120); and the securing cap (80, 100) is configured at least partly elastically deformably such that the first and second engagement elements (43, 70, 75, 130) can be brought into engagement with one another by pressing the securing cap (80, 100) toward the closure element (40, 50) wherein the shape-matched elements (48, 60, 90, 100) of the closure element (40, 50) and of the securing cap (80, 100) are tongue and groove connection elements.

2. A childproof closure in accordance with claim 1, **characterized in that** the securing cap (80, 100) represents a beaker-like element which is configured such that it can be pushed over the closure element (40, 50).

3. A childproof closure in accordance with claim 1 or claim 2, **characterized in that** the closure element (40, 50) is a beaker-like element having a hollow cylindrical part (45, 55) and a base (41, 57), wherein the closure element (40, 50) has first engagement elements (43, 70) at its jacket surface (55) or at the outer side of the base (41).

4. A childproof closure in accordance with any one of the claims 1 to 3, **characterized in that** the securing cap (80, 100) is a beaker-like element which can be pushed over the closure element (40, 50) and which has a hollow cylindrical part and a base, wherein the securing cap (80, 100) has second engagement elements (75, 130) at its inner side.

5. A childproof closure in accordance with any one of the claims 1 to 4, **characterized in that** the securing cap (80, 100) is dimensioned such that the securing cap (80, 100) pushed over the closure element (40, 50) is freely rotatable in the mechanically non-stressed state with respect to the closure element (40, 50).

6. A childproof closure in accordance with any one of the claims 1 to 5, **characterized in that** the engagement elements (43, 70, 75, 130) have a saw tooth structure.

7. A childproof closure in accordance with claim 1, **characterized in that** the closure element (40, 50) has a peripheral or sector-like latch groove (48, 60) extending transversely to its concentric longitudinal axis, and the securing cap (80, 100) has at least one spring element (90, 120) which can engage elastically into the latch groove (48, 60) of the closure element (40, 50) and is molded to the securing cap (80, 100).

8. A childproof closure in accordance with claim 1, **characterized in that** the securing cap (80, 100) has a peripheral or sector-like grove extending transversely to its concentric longitudinal axis; and the closure element (40, 50) has at least one spring element which can engage elastically into the groove of the securing cap and which is molded to the closure element (40, 50).

9. A childproof closure in accordance with any one of the claims 1 to 8, **characterized in that** the dispensing apparatus (5) is a multicomponent cartridge, in particular a two-component cartridge.

10. A childproof closure in accordance with any one of the claims 1 to 9, **characterized in that** the socket elements (25, 27) represent ring-like or sector-like elements having an undercut for the at least partial shape-matched reception of the bayonet lugs (30, 32).

11. A childproof closure in accordance with claim 10, **characterized in that** the coding elements are formed by cut-outs at the socket elements (25, 27) and bayonet lugs (30, 32) of different widths such that the bayonet lugs (30, 32) of the closure element (40, 50) or of the dispensing apparatus (5) can be introduced in only one specific position with respect to the cut-outs of the ring-like or sector-like socket elements (25, 27).

12. A childproof closure in accordance with any one of the claims 1 to 11, **characterized in that** the socket elements (25, 27) and the dispensing apparatus (5) are configured in one piece in the form of a molded body, and the bayonet lugs are molded in one piece in the form of a molded body to the closure element (40, 50).

13. A childproof closure in accordance with any one of the claims 1 to 11, **characterized in that** the socket elements and the closure element (40, 50) are configured in one piece in the form of a molded body, and the bayonet lugs (30, 32) are molded in one piece in the form of a molded body to the dispensing apparatus (5).

14. A childproof closure in accordance with any one of the claims 1 to 13, **characterized in that** the closure element (50) is a cylindrical element and has a saw tooth structure (70) extending parallel to its concentric longitudinal axis at at least a part of its jacket surface (55), the securing cap (80) is a beaker-like element having a hollow-cylindrical part (83) and a base (82), wherein the inner side of the hollow cylindrical part of the securing cap (80) has a saw tooth structure (75) which extends parallel to its concentric longitudinal axis and which can engage into the saw tooth structure (70) of the closure element (50), and the closure element (50) has radially projecting segment-like bayonet lugs (30, 32) at the margin of its jacket surface directed toward the dispensing apparatus transversely to its concentric longitudinal axis.

15. A childproof closure in accordance with any one of the claims 1 to 13, **characterized in that** the closure element (40) is a beaker-like element having a hollow cylindrical part (45) and a base (41) and has a radially outwardly extending saw tooth structure at at least a part of the outer surface of its base; the securing cap (10) is a beaker-like element having a hollow cylindrical part (115) and a base (105), wherein the inner side of the base (105) of the securing cap (100) has a radially outwardly extending saw tooth structure (130) which can engage into the saw tooth structure (43) of the closure element (40); and the closure element (40) has radially projecting segment-like bayonet lugs (30, 32) at the merging of its jacket surface directed toward the dispensing apparatus transversely to its concentric longitudinal axis.

16. A childproof closure in accordance with any one of the claims 1 to 15, **characterized in that** abutment flanks are present as a rotational boundary of the two bayonet fastening means (20, 21) at the dispensing apparatus (5) or at the closure element (40, 50) and extend parallel to the longitudinal axis of the closure element (40, 50) and are arranged over the bayonet lugs (30, 32).

17. A childproof closure in accordance with any one of the claims 1 to 16, **characterized in that** the closure contains a mixer, in particular a static mixer element, wherein the mixer can be brought into fluid communication with the content of the dispensing apparatus (5) and pierces the closure element (40, 50) and the securing cap (80, 100) approximately centrally, wherein the closure element (40, 50) and the securing cap (80, 100) are configured freely rotatably, but sealingly, with respect to the mixer.

## Revendications

1. Fermeture avec sécurité pour enfant pour un dispositif d'évacuation (5) avec de premiers moyens de fixation à baïonnette (20), où la fermeture (40, 50, 80, 100) présente de deuxièmes moyens de fixation à baïonnette (21), et un des deux moyens de fixation à baïonnette (20, 21) présente des languettes à baïonnette (30, 32) qui peuvent être insérées dans des éléments de socle correspondants (25, 27) de l'autre moyen de fixation à baïonnette (20, 21), et les deux moyens de fixation à baïonnette (20, 21) présentent des éléments de codage (13, 23, 35, 38) pour une orientation prédéfinie de la fermeture (40, 50, 80, 100) et le dispositif d'évacuation (5),
**caractérisée en ce que** la fermeture (40, 50, 80, 100) présente un élément de fermeture (40, 50) avec de premiers éléments d'engagement (43, 70) et un capuchon de sécurité (80, 100), recouvrant l'élément de fermeture (40, 50) au moins partiellement, avec de deuxièmes éléments d'engagement (75, 130), le capuchon de sécurité (80, 100) et l'élément de fermeture (40, 50) sont reliés par des éléments à concordance des formes (58, 60, 90, 120) de manière non séparable, cependant aptes à tourner l'un relativement à l'autre, et le capuchon de sécurité (80, 100) est réalisé au moins partiellement de manière élastiquement déformable que les premiers et deuxièmes éléments d'engagement (43, 70, 75, 130) peuvent être amenés en prise en pressant le capuchon de sécurité (80, 100) contre l'élément de fermeture (40, 50), les éléments à concordance des formes (48, 60, 90, 100) de l'élément de fermeture (40, 50) et du capuchon de sécurité (80, 100) étant des éléments à languette et rainure.

2. Fermeture avec sécurité pour enfant selon la revendication 1, **caractérisée en ce que** le capuchon de sécurité (80, 100) est un élément en forme de pot qui est réalisé de façon qu'il puisse être enfoncé sur l'élément de fermeture (40, 50).

3. Fermeture avec sécurité pour enfant selon la revendication 1 ou 2, **caractérisée en ce que** l'élément de fermeture (40, 50) est un élément en forme de pot avec une partie en forme de cylindre creux (45, 55) et un fond (41, 57), l'élément de fermeture (40, 50) présentant à sa face d'enveloppe (55) ou au côté extérieur du fond (41) des premiers éléments d'engagement (43, 70).

4. Fermeture avec sécurité pour enfant selon l'une des revendications 1 à 3, **caractérisée en ce que** le capuchon de sécurité (80, 100) est un élément en forme de pot, apte à être enfoncé sur l'élément de fermeture (40, 50), avec une partie en forme de cylindre creux et un fond, le capuchon de sécurité (80, 100) présentant à son côté intérieur des deuxièmes éléments d'engagement (75, 130).

5. Fermeture avec sécurité pour enfant selon l'une des revendications 1 à 4, **caractérisée en ce que** le capuchon de sécurité (80, 100) est dimensionné de façon que le capuchon de sécurité (80, 100) enfoncé sur l'élément de fermeture (40, 50), à l'état mécaniquement non sollicité, peut être amené à tourner librement par rapport à l'élément de fermeture (40, 50).

6. Fermeture avec sécurité pour enfant selon l'une des revendications 1 à 5, **caractérisée en ce que** les éléments d'engagement (43, 70, 75, 130) présentent une structure en dents de scie.

7. Fermeture avec sécurité pour enfant selon la revendication 1, **caractérisée en ce que** l'élément de fermeture (40, 50) présente une rainure d'enclenchement (48, 60) s'étendant tout autour ou en forme de secteur, s'étendant transversalement à son axe longitudinal concentrique, et le capuchon de sécurité (80, 100) présente au moins un élément de ressort (90, 120) apte à s'engager élastiquement dans la rainure d'enclenchement (48, 60) de l'élément de fermeture (40, 50), rapporté par formage au capuchon de sécurité (80, 100).

8. Fermeture avec sécurité pour enfant selon la revendication 1, **caractérisée en ce que** le capuchon de sécurité (80, 100) présente une rainure s'étendant tout autour ou en forme de secteur, s'étendant transversalement à son axe longitudinal concentrique, et **en ce que** l'élément de fermeture (40, 50) présente au moins un élément de ressort apte à s'engager élastiquement dans la rainure du capuchon de sécurité, rapporté par formage à l'élément de fermeture (40, 50).

9. Fermeture avec sécurité pour enfant selon l'une des revendications 1 à 8, **caractérisée en ce que** le dispositif d'évacuation (5) est une cartouche à plusieurs composants, en particulier une cartouche à deux composants.

10. Fermeture avec sécurité pour enfant selon l'une des revendications 1 à 9, **caractérisée en ce que** les éléments de socle (25, 27) représentent des éléments en forme d'anneau ou de secteur, avec une contre-dépouille pour la réception au moins partielle par concordance des formes des languettes à baïonnette (30, 32).

11. Fermeture avec sécurité pour enfant selon la revendication 10, **caractérisée en ce que** les éléments de codage sont réalisés par des évidements aux éléments de socle (25, 27) et languettes à baïonnette (30, 32) de largueur différente de telle sorte que les languettes à baïonnette (30, 32) de l'élément de fermeture (40, 50) respectivement du dispositif d'évacuation (5), relativement aux évidements des éléments de socle en forme d'anneau ou de secteur (25, 27) peuvent être insérées seulement dans une certaine position.

12. Fermeture avec sécurité pour enfant selon l'une des revendications 1 à 11, **caractérisée en ce que** les éléments de socle (25, 27) et le dispositif d'évacuation (5) sont réalisés en une pièce sous la forme d'un corps moulé, et les languettes à baïonnette (30, 32) sont rapportées par formage en une pièce sous la forme d'un corps moulé à l'élément de fermeture (40, 50).

13. Fermeture avec sécurité pour enfant selon l'une des revendications 1 à 11, **caractérisée en ce que** les éléments de socle et l'élément de fermeture (40, 50) sont réalisés en une pièce sous la forme d'un corps moulé, et **en ce que** les languettes à baïonnette sont rapportées par formage en une pièce sous la forme d'un corps moulé au dispositif d'évacuation (5).

14. Fermeture avec sécurité pour enfant selon l'une des revendications 1 à 13, **caractérisée en ce que** l'élément de fermeture (50) est un élément cylindrique et présente au moins à une partie de sa face d'enveloppe (55) une structure en dents de scie (70) s'étendant parallèlement à son axe longitudinal concentrique, le capuchon de sécurité (80) est un élément en forme de pot avec une partie en forme de cylindre creux (83) et un fond (82), où le côté intérieur de la partie en forme de cylindre creux du capuchon de sécurité (80) présente une structure en dents de scie (75) s'étendant parallèlement à son axe longitudinal concentrique, apte à s'engager dans la structure en dents de scie (70) de l'élément de fermeture (50), et l'élément de fermeture (50) présente au bord de sa face d'enveloppe orienté vers le dispositif d'évacuation, des languettes à baïonnette (30, 32) en forme de segments, faisant saillie radialement, transversalement à son axe longitudinal concentrique.

15. Fermeture avec sécurité pour enfant selon l'une des revendications 1 à 13, **caractérisée en ce que** l'élément de fermeture (40) est un élément en forme de pot avec une partie en forme de cylindre creux (45) et un fond (41) et présente au moins à une partie de sa face extérieure de fond une structure en dents de scie (43) s'étendant radialement vers l'extérieur, le capuchon de sécurité (100) est un élément en forme de pot avec une partie en forme de cylindre creux (115) et un fond (105), où le côté intérieur du fond (105) du capuchon de sécurité (100) présente une structure en dents de scie (130) s'étendant radialement vers l'extérieur, apte à s'engager dans la structure en dents de scie (43) de l'élément de fermeture (40), et l'élément de fermeture (40) présente au bord de sa face d'enveloppe orienté vers le dispositif d'évacuation des languettes à baïonnette (30, 32) en forme de segments, faisant saillie radialement, transversalement à son axe longitudinal concentrique.

16. Fermeture avec sécurité pour enfant selon l'une des revendications 1 à 15, **caractérisée en ce que** sont prévus au dispositif d'évacuation (5) ou à l'élément de fermeture (40, 50) des flancs de butée s'étendant parallèlement à l'axe longitudinal de l'élément de fermeture (40, 50), disposés au-dessus des languettes à baïonnette (30, 32), en tant que limitation de rotation des deux moyens de fixation à baïonnette (20, 21).

17. Fermeture avec sécurité pour enfant selon l'une des revendications 1 à 16, **caractérisée en ce que** la fermeture comprend un mélangeur, en particulier un élément de mélange statique, le mélangeur pouvant être amené en une liaison fluidique avec le contenu du dispositif d'évacuation (5), et transperce l'élément de fermeture (40, 50) et le capuchon de sécurité (80, 100) à peu près au milieu, où l'élément de fermeture (40, 50) et le capuchon de sécurité (80, 100) sont réalisés d'une manière librement tournante relativement au mélangeur, cependant de manière à assurer l'étanchéité.
